# NEUE EUROPÄISCHE PATENTSCHRIFT

(11) **EP 1 320 244 B2**
(45) Veröffentlichungstag und Bekanntmachung des Hinweises auf die Entscheidung über den Einspruch: **03.03.2010**
(45) Hinweis auf die Patenterteilung: 03.05.2006
(21) Anmeldenummer: 02027577.2
(22) Anmeldetag: 10.12.2002
(51) Int. Cl.: H04M 1/02, H04M 9/02

(54) **Modulare Hauskommunikationsanlage**
Modular Door Intercom System
Système d'interphone modulaire

(30) Priorität: 11.12.2001 DE 10160813
(43) Veröffentlichungstag der Anmeldung: 18.06.2003
(60) Teilanmeldung: 06101412.2
(73) Patentinhaber: GIRA GIERSIEPEN GmbH. & CO. KG, D-42477 Radevormwald (DE)
(72) Erfinder: Dornseiff, Andre, 42477 Hückeswagen (DE); Steinmetzler, Andreas, 42857 Remscheid (DE)
(74) Vertreter: Patentanwälte Dr. Solf & Zapf

(56) Entgegenhaltungen:
- EP-A- 1 135 013
- DE-A- 19 548 744
- DE-C- 19 836 457
- DE-C1- 19 710 535
- JUNG: 'Jung-Technisches Handbuch '99', 1999

## Beschreibung

Die vorliegende Erfindung betrifft eine Hauskommunikationsanlage mit mindestens einer Türstation und mindestens einer Wohnungsstation, wobei zumindest die/jede Wohnungsstation über eine Zweidraht-Leitung angeschlossen bzw. anschließbar ist.

Heutige Hauskommunikationsanlagen (Türsprechanlagen) verwenden zur Verbindung einer von eventuell mehreren Wohnungsstationen mit einer Türstation in der Regel nur noch zwei Leitungsadern. Dabei werden - wie bei einem analogen Telefon - die Versorgungsspannung für die Teilnehmergeräte sowie Sprach- und eventuelle Vermittlungsdaten über dieses Aderpaar übertragen. Die Spannungsversorgung wird im allgemeinen über einen zentrales Netzteil sichergestellt. Solche Anlagen können Bussysteme oder sogenannte "1+n-Anlagen" sein.

Bei 1 +n-Anlagen dient die Türstation als Vermittlungsstelle. Jede Wohnungsstation ist dabei über eine eigene Leitung mit der Türstation sowie mit einer Masseleitung verbunden. Die "1" in "1+n" steht dabei für die gemeinsame Masseleitung, das "n" für die Anzahl der Wohnungsstationen und damit der Einzeladern. Die Versorgungsspannung aus dem Netzteil wird dabei an die Türstation geführt und von dort aus an die einzelnen Wohnungsstationen.

Bei Busanlagen werden alle Teilnehmer, ob Tür- oder Wohnungsstation, an eine gemeinsame Zweidraht-Busleitung angeschlossen, die an ein Netzteil geführt ist, welches die erforderliche Betriebsspannung über die Busleitung einspeist. Solche Hauskommunikationsanlagen bzw. sogenannte Türsprechanlagen des Typs "Zweidraht-Bussystem" sind beispielsweise in den Druckschriften DE 195 48 744 C2, DE 197 16 598 C1, DE 197 16 599 C2 und DE 30 23 988 A1 beschrieben.

Bei solchen bekannten Anlagen bestehen die vorhandenen Tür- und Wohnungsstationen aus unterschiedlichen Geräten für den Innen- und Aussenbereich, wobei jedes Gerät zudem speziell für die Jeweils vorbestimmte Verwendung zum Beispiel als Türstation oder als Wohnungsstation konzipiert ist. Üblicherweise handelt es sich um jeweils einheitliche Geräte mit einem auf einer Montagefläche (zum Beispiel einer Wand), also "auf Putz (AP)" zu installierenden Gerätegehäuse. Eine Installation unter Putz (UP) ist nur auf sehr aufwändige Weise über recht große UP-Kästen möglich. Im Falle einer nachträglichen Gebäudeinstallation bedingt dies aufwändige Stemmarbeiten. Diese bekannten Anlagen führen deshalb zu einem hohen Aufwand für Herstellung der einzelnen Geräte, Lagerhaltung (Bereitstellung verschiedener Geräte) und auch Montage.

Das oben bereits erwähnte Dokument DE 195 48 744 A1 beschreibt eine "Signal- und Gegensprechanlage für die Haustechnik", bei der alle vorhandenen Geräte jeweils speziell für den jeweiligen Einsatz konzipiert sind, d. h. speziell als Türstation oder als Wohnungsstation (Haustelefon bzw. Türsprechgerät). Dabei weist jedes einzelne Gerät ein spezielles Gehäuse mit darin untergebrachten Bauteilen auf.

Das Dokument DE 198 36 457 C1 beschreibt eine "Türanlage", bei der es sich eigentlich nur um eine Türstation handelt. Dieses Gerät besteht aus einem Gehäuse mit einem Aufnahmeraum für mehrere Funktionseinheiten, die in einer Zeile oder Spalte nebeneinander in den Aufnahmeraum des Gehäuses mittels Verbindungs- und Gegenverbindungselementen einsetzbar und darin gehalten sind. Die Funktionseinheiten können als "Module" angesehen werden, die aber jeweils als einheitliche Geräteteile in einer Montageebene nebeneinander anzuordnen sind. Zur Montage ist für jede Funktionseinheit ein rahmenartiges Aufnahmegehäuse vorhanden, welches zuvor in das gemeinsame, zur Aufnahme mehrerer Funktionseinheiten entsprechend groß auszubildende Umgehäuse einzusetzen ist. Zum elektrischen Anschluss der jeweiligen Funktionseinheit weist das Aufnahmegehäuse eine entsprechende Steckbuchse auf. Somit hat das Aufnahmegehäuse ausschließlich mechanische Halterungsfunktion und elektrische Anschlussfunktion für die zugehörige Funktionseinheit. Ein Hinweis auf einen Zweidraht-Anschluss des Gerätes ist in dem Dokument nicht enthalten.

Auch das Dokument EP 1 135 013 A1 beschreibt ausschließlich eine Türstation und dabei einen Modulaufbau mit mehreren Funktionsmodulen, die jeweils eine Modulbasis (Basismodul), eine Leiterplatte, eine Frontplatte und gegebenenfalls einen Trägereinsatz umfassen. Die Funktionsmodule sind in Aufsicht rechteckig, insbesondere quadratisch, ausgebildet und mit mechanischen Verbindungselementen mit ihren Umfangskanten aneinander angrenzend zu einer selbsttragenden Einheit aus in Zeilen und/oder Spalten in einer gemeinsamen Ebene angeordneten Funktionsmodulen verbindbar. Zudem weisen die Funktionsmodule Befestigungsmittel zur unmittelbaren Befestigung der Einheit an einem gebäudeseitigen ortsfesten Wandelement-Mauerwerk auf. Es handelt sich somit um eine Aufputz-Montage (AP).

Der vorliegenden Erfindung liegt die Aufgabe zugrunde, eine Hauskommunikationsanlage der genannten Art zu schaffen, mit der der Aufwand für Herstellung, Lagerhaltung und Montage reduziert und dabei eine hohe Installationsvariabilität erreicht wird.

Erfindungsgemäß wird dies durch die Merkmale des unabhängigen Patentanspruchs 1 erreicht. Vorteilhafte Ausgestaltungen sind Gegenstand der abhängigen Ansprüche.

Zumindest eine Teilmenge der vorhandenen Tür- und/oder Wohnungsstationen ist modular aufgebaut, wobei jede modular aufgebaute Station aus mindestens einem Hauptmodul sowie mindestens einem Funktionsmodul besteht, wobei das/jedes Hauptmodul nach Art eines Elektro-Installationsgerätes eines üblichen Gebäudeinstallationssystems aus einem sockelartigen, in eine normgemäße Elektro-Installationsdose einsetzbaren Einsatz besteht, wobei das Fünktionsmodul elektrisch und mechanisch mit dem Hauptmodul verbindbar ist.

Durch diese vorteilhafte Ausgestaltung ist auf eine sehr einfache und damit wirtschaftliche Weise optional eine UP-Installation oder eine AP-Installation der einzelnen Stationen möglich, indem das jeweilige Hauptmodul lediglich - nach Art eines normgemäßen Inställätionsgerätes, wie Schalter, Steckdose oder dergleichen (in Deutschland DIN 49200 maßgeblich) - in eine übliche Installationsdose (UP oder AP) eingesetzt zu werden braucht. Für Unterputz-Gerätedosen ist in Deutschland insbesondere die DIN 49073 maßgeblich.

Mit besonderem Vorteil können alle oder zumindest eine überwiegende Anzahl der vorhandenen Tür- und Wohnungsstationen der Anlage aus universell einsetzbaren Haupt- und Funktionsmodulen aufgebaut sein, wobei zweckmäßig jedes Funktionsmodul unmittelbar auf das jeweilige Hauptmodul aufsteckbar ist. Dadurch wird das Funktionsmodul über mechanische Verbindungsmittel gehalten und/oder über elektrische Steckverbinder angeschlossen. Jedes grundsätzlich universell für jede beliebige Station einsetzbare Hauptmodul erhält eine bestimmte, für die jeweilige Station spezifische Gerätefunktion durch Verbindung mit einem bestimmten, entsprechend kodierten Funktionsmodul oder einem bestimmten weiteren Hauptmodul und/oder durch spezielle Schalt-/Einstellmittel (Kodierschalter).

Durch die Erfindung wird somit eine modular aufgebaute Hauskommunikationsanlage geschaffen, die auf Grund von wenigen, sehr weitgehend universell verwendbaren Komponenten (Modulen) eine einfache und kostengünstige Herstellung, einen geringen Lager- bzw. Bevorratungsaufwand, eine einfache Montage (Installation) sowie ein großes Variationsspektrum gewährleistet.

Weitere vorteilhafte Ausgestaltungsmerkmale und Vorteile der Erfindung sind in der folgenden Beschreibung enthalten.

An Hand der Zeichnung soll die Erfindung beispielhaft genauer erläutert werden. Dabei zeigen:
- Fig. 1: eine schematische, blockschaltbildartige Darstellung einer Hauskommunikationsanlage in bevorzugter Ausführung als Bussystem und in einem beispielhaften Ausbauumfang,
- Fig.2: mehrere Ausführungsformen von Hauptmodulen nach der Erfindung jeweils in stark schematischer Seitenansicht,
- Fig. 3: ein Beispiel einer Türstation in einer Ansicht auf die Vorderseite (Bedienungsseite),
- Fig. 4: eine schematische Explosions-Seitenansicht der Bestandteile in Pfeilrichtung IV gemäß Fig. 3,
- Fig. 5: eine Ansicht einer Wohnungsstation analog zu Fig. 3 in einer ersten möglichen Ausführung,
- Fig. 6: eine Seitenansicht analog zu Fig. 4 in Pfeilrichtung VI gemäß Fig. 5,
- Fig. 7: eine Ansicht einer Wohnungsstation in einer Ausführungsvariante,
- Fig. 8: eine Explosions-Seitenansicht dieser Wohnungsstation nach Fig. 7,
- Fig. 9: eine Ansicht in Pfeilrichtung IX der Komponenten nach Fig. 8,
- Fig. 10: eine weitere Ausführungsvariante einer Wohnungsstation in Vorderansicht,
- Fig. 11: die Wohnungsstation nach Fig. 10 in Explosions-Seitenansicht (Pfeilrichtung XI gemäß Fig. 10),
- Fig. 12 und 13: eine weitere Ausführung einer Wohnungsstation in Ansichten analog zu beispielsweise Fig. 3 und 4,
- Fig. 14 und 15: weitere Ansichten wie zuvor einer alternativen Ausführung einer Türstation,
- Fig. 16 und 17: analoge Ansichten einer zugehörigen Wohnungsstation ,
- Fig. 18 und 19: gleichartige Ansichten eines speziellen Lichtsignaigerätes,
- Fig. 20 und 21: entsprechende Ansichten eines speziellen Rufsignalgerätes und
- Fig. 22 und 23: gleichartige Darstellungen eines speziellen Tastergerätes.

In den verschiedenen Figuren der Zeichnungen sind gleiche Teile stets mit den gleichen Bezugszeichen versehen. Daher gilt jede evtl. nur einmal vorkommende Beschreibung eines Teils auch für alle anderen Zeichnungsfiguren, in denen dieses Teil mit der entsprechenden Bezugsziffer ebenfalls zu erkennen ist.

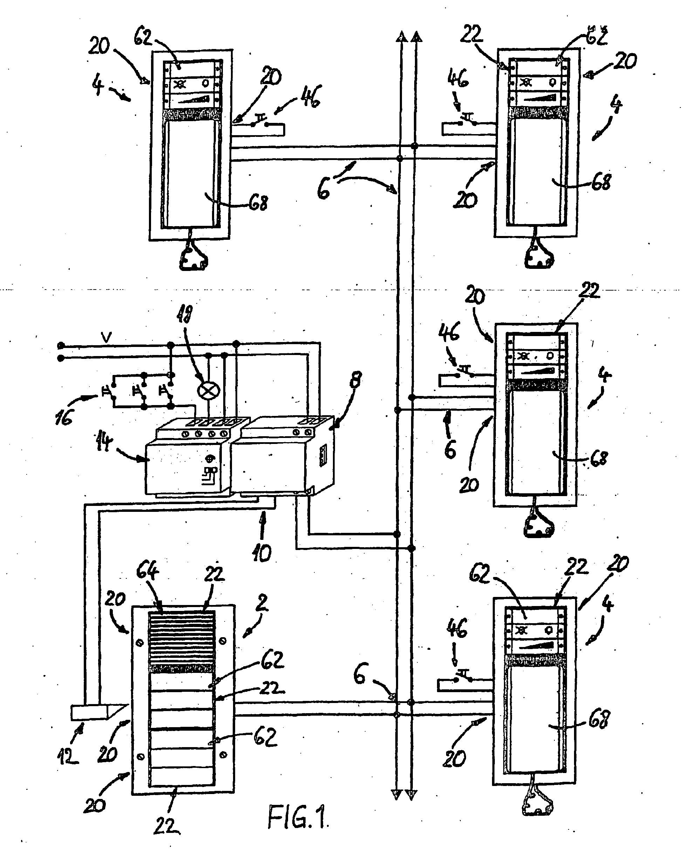

In Fig. 1 ist ein beispielhafter Aufbau einer Hauskommunikationsanlage in einer Ausführung als Bussystem veranschaulicht. Eine solche Anlage besteht üblicherweise aus (mindestens) einer Türstation 2, die im Aussenbereich einer Haustür installiert wird, sowie aus mindestens einer Wohnungsstation 4, die im Innenbereich üblicherweise neben einer Wohnungseingangstür installiert wird. Bei dem in Fig. 1 veranschaulichten Beispiel sind vier Wohnungsstationen 4 vorgesehen. Die Anlage ist jedoch beliebig ausbaufähig. Die Stationen 2, 4 sind über eine gemeinsame Busverbindung 6 verbunden, wobei es sich bevorzugt um einen 2-Draht-Bus handelt. Über die Busverbindung 6 werden alle für Kommunikation und Verbindungsaufbau benötigten Signale und Befehle übertragen. Zudem dient die Busverbindung 6 auch zur Spannungsversorgung der einzelnen Stationen 2, 4. Dazu ist ein zentrales, an die Busverbindung 6 angeschlossenes Bussteuergerät 8 vorgesehen, welches insbesondere ein Netzteil und vorzugsweise eine von den Wohnungsstationen 4 aus durch digitale Signale ansteuerbare Türöffner-Ansteuerung 10 aufweist. Das Bussteuergerät 8 erzeugt aus einer Versorgungsspannung V, üblicherweise der Netzspannung von 230 Volt, eine Betriebsspannung für alle Stationen 2, 4. Diese Betriebsspannung wird über die Busverbindung 6 an alle Stationen geführt. Bei einer Ruftastenbetätigung an der Türstation 2 wird von dieser ein digitaler Adresscode über die Busverbindung 6 versendet. Dieser ruft eine bestimmte Wohnungsstation 4, die zuvor bei der Installation auf diesen Adresscode programmiert wurde. Die Wohnungsstation 4 mit übereinstimmendem Adresscode erzeugt nach Empfang einen Rufton. Dadurch kann eine Sprechverbindung zur Türstation 2 hergestellt werden. Sprachsignale werden bevorzugt analog über die Busverbindung 6 übertragen. Bei Betätigung einer Türöffnertaste an der Wohnungsstation 4 wird ein digitales Telegramm als Befehlssignal über die Busverbindung 6 übertragen, wodurch im Bussteuergerät 8 über die Türöffner-Ansteuerung 10 ein Türöffner 12 aktiviert wird.

Zu der in Fig. 1 veranschaulichten Anlage gehört weiterhin bevorzugt ein Lichtaktor 14 zur Ansteuerung einer Treppenhausbeleuchtung in größeren Wohnhäusern. Der Lichtaktor 14 empfängt dazu ein von einer Lichttaste der Wohnungsstation 4 ausgesendetes, individuelles digitales Telegramm als Befehlssignal zur Aktivierung der Treppenhausbeleuchtung. Zudem kann der Lichtaktor 14 auch über im Treppenhaus installierte Lichttaster 16 aktiviert werden. Die zu steuemde Beleuchtung ist in Fig. 1 beispielhaft durch nur eine Leuchte 18 veranschaulicht.

Weiterhin können optional zusätzliche (beliebige) Aktoren, beispielsweise Relais für bestimmte Schaltfunktionen, Dimmer und/oder dergleichen vorgesehen sein.

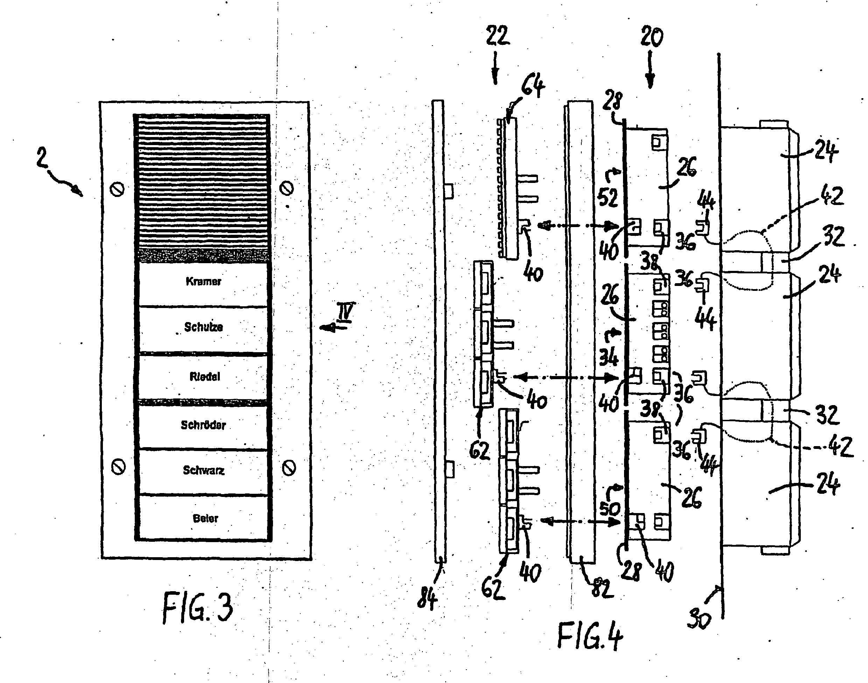

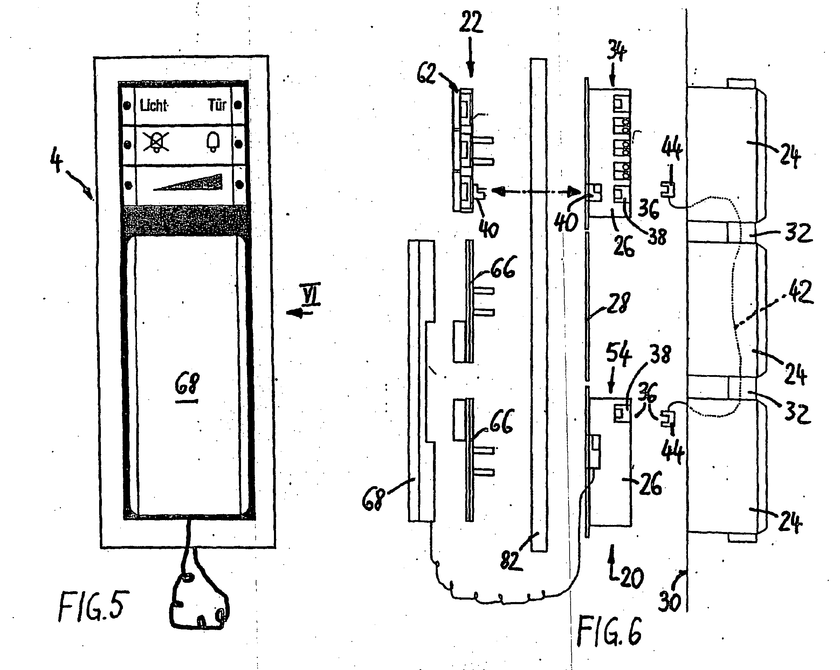

Erfindungsgemäß sind die (jede) Türstation 2 und jede Wohnungsstation 4 modular aufgebaut. Jede Station 2, 4 besteht aus mindestens einem Hauptmodul 20 und mindestens einem Funktionsmodul 22. Jedes Hauptmodul 20 zeichnet sich dadurch aus, dass es nach Art eines üblichen Elektro-Installadonsgerätes aus einem söckelartigen, in eine normgemäße Elektro-Installationsdose 24 (siehe dazu Fig. 4 und 6) einsetzbaren Einsatz 26 besteht. Zur Befestigung in der jeweiligen Installationsdose 24 weist jeder Einsatz 26 ein übliches, rahmen- oder plattenförmiges Tragelement 28 (z. B. sogenannter Tragring) auf. Jeder Einsatz 26 wird so in die Dose 24 eingesetzt, dass das Tragelement 28 dann im Wesentlichen in der Öffnungsebene der Dose 24 und randlich auf einer Montagefläche 30 liegt. Bei den in Fig. 4 und 6 dargestellten Installationsdosen 24 handelt es sich um eine UP-Ausführung, wobei die Montagefläche 30 eine Wandoberfläche ist. Derartige UP-Dosen werden bei einer Mehrfachanordnung über kanalartige Verbindungen 32 zusammengesteckt. Diese Verbindungen 32 dienen zum Durchführen von Leitungsverbindungen. Der Mittenabstand der Dosen 24 und damit auch der darin installierten Einsätze 26 voneinander entspricht dem üblichen Installations-Stichmaß von insbesondere 71 mm.

Jedes dieser Hauptmodule 20 kann mit einem Funktionsmodul 22 elektrisch und/oder mechanisch verbunden werden. Zweckmäßigerweise ist jedes Funktionsmodul 22 unmittelbar auf das jeweilige Hauptmodul 20 aufsteckbar und dadurch über mechanische Verbindungsmittel gehalten und/oder über elektrische Steckverbinder angeschlossen.

Die vorhandenen Module 20, 22 sind überwiegend universell zum Aufbau der gesamten Anlage einsetzbar.

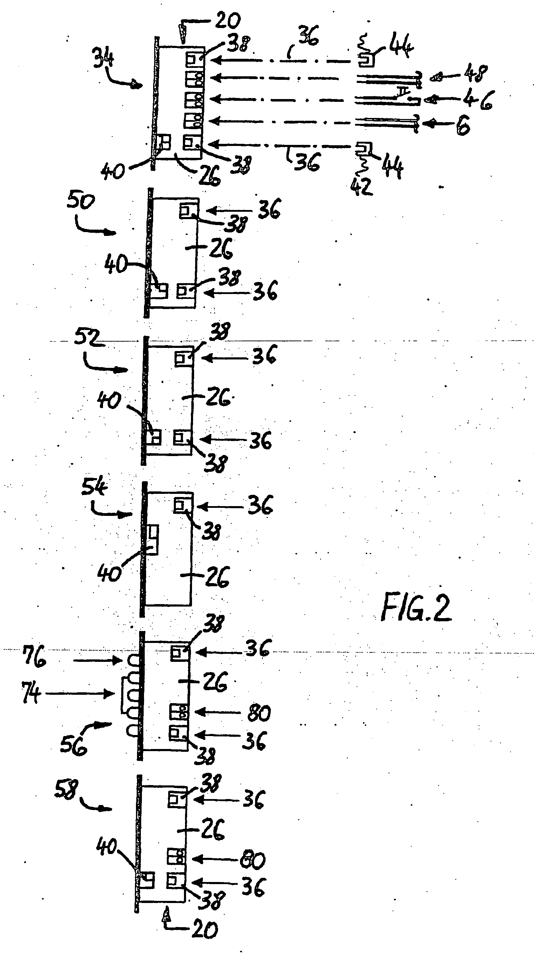

In Fig. 2 sind unterschiedliche Hauptmodule 20 veranschaulicht, mit denen alle Stationen, ob Türstation 2 oder Wohnungsstation 4, aufgebaut werden können. Als erstes Hauptmodul ist ein Busankoppler-Einsatz 34 vorgesehen, der in jedem modular aufgebauten Gerät vorhanden sein muss. Dieser Busankoppler-Einsatz 34 ist das Verbindungsglied zur Busverbindung 6. Der Busankoppler 34 empfängt und sendet Daten von und zur Busverbindung 6.

Zusätzlich zu diesem ersten Hauptmodul 20, dem Busankoppler 34, weist jede Station 2, 4 in der Regel mindestens ein weiteres, zweites Hauptmodul 20 auf. Dabei sind die Hauptmodule 20 innerhalb jeder einzelnen Station 2, 4 untereinander sowie eventuell auch mit bestimmten zugehörigen Funktionsmodulen 22 über einen Internbus 36 verbindbar. Jedes Hauptmodul 20 weist dazu Schnittstellen 38 (Steckverbinder) auf, die intern durchgeschleift sind. Zum Anschluss des jeweiligen Funktionsmoduls 22 sind weitere Steckverbinderteile 40 vorgesehen, die zumindest teilweise die Signale des Intembus 36 übertragen können. Zur gegenseitigen Verbindung der Hauptmodule 20 jeder Station 2, 4 sind Verbindungsleitungen 42 vorgesehen, die bevorzugt als Flachleitungen aus wenigen, beispielsweise sechs Adern bestehen. Die Verbindungsleitungen 42 können durch die kanalartigen Verbindungen 32 der Installationsdosen 24 geführt und über Steckverbinder 44 mit den Internbus-Schnittstellen 38 verbunden werden. Die Steckverbinder 44 der Verbindungsleitungen 42 sind bzgl. ihrer Größe derart ausgelegt, dass sie ein Durchführen durch die Kanalverbindungen 32 gestatten. Der Busankoppler-Einsatz 34 gemäß Fig. 2 weist zum Anschluss der Busverbindung 6 entsprechende Anschlusselemente (insbesondere Doppelklemmen) auf. Weitere Anschlussmittel dienen zum Anschluss eines Etagenruftasters 46 (Türklingelknopf). Vorzugsweise sind zusätzliche Anschlusselemente für eine Zusatz-Versorgungsleitung 48 vorgesehen. Hierdurch kann lokal ein zusätzliches Netzteil zur Spannungsversorgung angeschlossen werden. Diese Zusatzversorgung kann auch direkt auf zwei Adem des Intembusses 36 geführt werden.

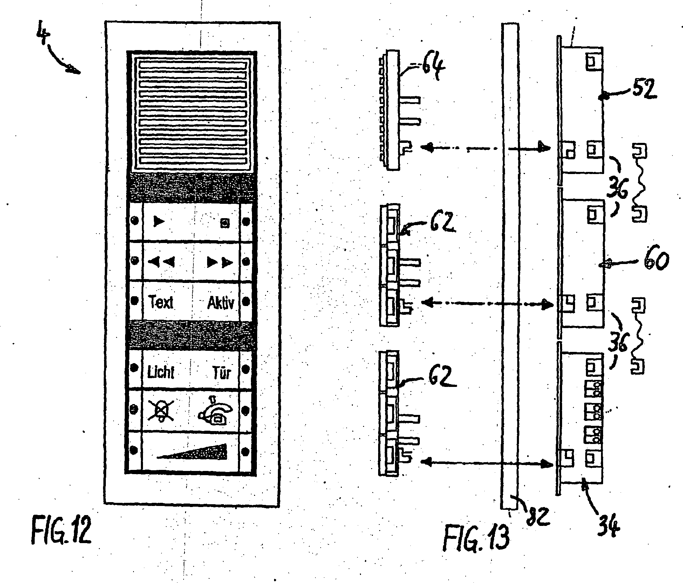

Gemäß Fig. 2 können als zusätzliches Hauptmodul 20 ein Tasteneinsatz 50, ein Sprecheinsatz 52, ein Hörereinsatz 54, ein Kameraeinsatz 56 und/oder ein Displayeinsatz 58 vorgesehen sein. Zudem kann es sich bei dem weiteren Hauptmodul 20 auch gemäß Fig. 12 und 13 um einen Sprachrekordereinsatz 60 oder um einen Bildrekorder handeln. Aufgaben und Funktionen dieser Einsätze werden im Folgenden noch genauer beschrieben.

Wie sich an Hand der verschiedenen Ausführungsbeispiele ab Fig. 3 erkennen lässt, können mit den Hauptmodulen 20 verschiedenartige Funktionsmodule 22 verbunden werden. Als Funktionsmodul 22 sind ein Tastenaufsatz 62 mit vorzugsweise mehreren (wie dargestellt beispielsweise drei) Drucktasten, ein Sprechaufsatz 64 mit Mikrophon und/oder Lautsprecher, ein Hörer-Aufnahmeaufsatz 66 mit Haltemitteln für einen Hörer 68, ein Displayaufsatz 70, ein Kameraufsatz und/oder ein Signalaufsatz 72 mit akustischem und/oder optischem Signalgeber vorgesehen.

Der Busankoppler-Einsatz 34 empfängt und sendet Daten von und zur Busverbindung 6. Empfangene Daten werden in einem integrierten Microcontroller ausgewertet und bei Bedarf über die Schnittstelle 38 zum Internbus 36 weitergeleitet. Zu sendende Daten erhält der Busankoppler 34 vom Intembus 36, die er auswertet und auf die Busverbindung 6 weiterleitet. Bevorzugt in dem Busankoppler 34 findet ein Adressvergleich mit den zuvor bei der Installation abgelegten Adressen statt. Daten, die nicht zur Auswertung durch den Busankoppler bestimmt sind, werden direkt an den Intembus 36 weitergeleitet. Der Busankoppler 34 ist somit vorteilhafterweise transparent. Als Funktionsmodul 22 wird der Busankoppler 34 bevorzugt mit einem Tastenaufsatz 62 verbunden, dessen Tasten im Falle einer Wohnungsstation Steuertasten bzw. im Falle einer Türstation Ruftasten bilden.

Mit dem Tasteneinsatz 50 lassen sich die Stationen um weitere Tastenaufsätze 62 erweitem (insbesondere für die Türstation 2). Der Tasteneinsatz 50 schleift lediglich die Signale des Interbusses 36 zu den entsprechenden Schnittstellen 38 weiter und nimmt einen Tastenaufsatz 62 auf.

Der Sprecheinsatz 52 beinhaltet eine Elektronik für eine Freisprechfunktion. Diese findet gewöhnlich an der Türstation 2 ihren Einsatz. Aber auch bei den Wohnungsstationen 4 kann eine Freisprechfunktion grundsätzlich realisiert werden. Auf den Sprecheinsatz 52 wird ein Sprechaufsatz 64 mit Lautsprecher und Mikrophon aufgesetzt. Die Schnittstelle 40 beinhaltet die dafür notwendigen Signalverbindungen.

Zu sendende Audiosignale werden vom Sprecheinsatz 52 über den Internbus 36 an den Busankoppler 34 gesendet, welcher die Signale gegebenenfalls verstärkt und auf die Busverbindung 6 weiterleitet. Zu empfangende Ausiosignale von der Busverbindung 6 werden durch den Busankoppler 34 an den Sprecheinsatz 52 weitergeleitet. Die Sprechelektronik wird vom Busankoppler 34 gesteuert aktiviert, und zwar nur im Falle eines Sprechverbindungsaufbaus nach einer Ruftastenbetätigung an der Türstation 2.

Der Hörereinsatz 54 arbeitet grundsätzlich analog zum Sprecheinsatz 52, jedoch ist der elektronische Aufwand geringer, weil auf Grund des angeschlossenen Hörers 68 keine Rückkopplungen auftreten können und diese deshalb auch nicht wie beim Sprecheinsatz 52 durch spezielle Maßnahmen vermieden werden müssen. Der Hörer 68 wird über ein Anschlusskabel an dem Hörereinsatz 54 angeschlossen.

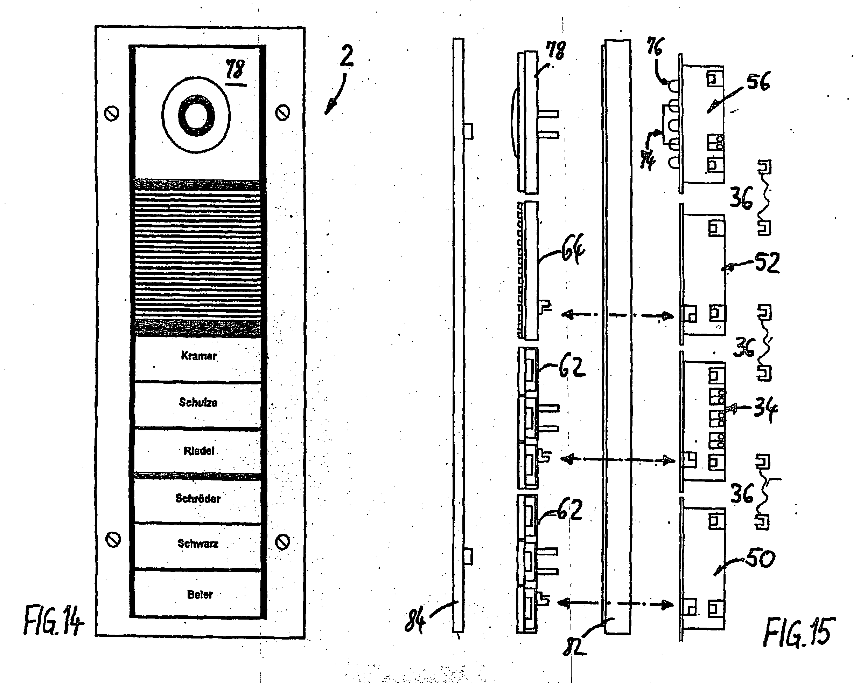

Der Kameraeinsatz 56 wird für Video-Türsprechanlagen eingesetzt. Der Kameraeinsatz 56 weist ein Objektiv 74 und bevorzugt eine Lichtquelle 76 zur Beleuchtung des jeweils darzustellenden Objektes auf. Im Falle des Kameraeinsatzes 56 wird an Stelle eines Funktionsmoduls lediglich ein Kameradeckel 78 aufgesetzt (vgl. Fig. 14 und 15). Alternativ kann dabei auch anstatt des Deckels 78 ein Kameraaufsatz vorgesehen sein, der dann die eigentliche Kamera aufweist, wobei der Kameraeinsatz 56 im Wesentlichen nur die zur Signalübertragung erforderliche Elektronik enthält.Das Videosignal kann als Normvideosignal über eine separate Bus-/Videoleitung 80 übertragen werden. Prinzipiell kann das Videosignal aber auch in einen Frequenzbereich ausserhalb des Hörfrequenzbereichs moduliert und über den Internbus 36 geleitet und über den Busankoppler 34 auf die Busverbindung 6 gesendet werden.

Der Displayeinsatz 58 (ebenfalls für Video-Türsprechanlagen) arbeitet grundsätzlich ähnlich zum Kameraeinsatz 56, nur werden lediglich die Videosignale empfangen und über den aufzusetzenden Displayaufsatz 70 (oder alternativ über ein integriertes Display) angezeigt.

Mit den genannten Modulen können nun nahezu beliebige Stationen 2, 4 auf einfache Weise aufgebaut werden. Dies soll an Hand der konkreten Ausführungsbeispiele erläutert werden. So ist zunächst in Fig. 3 ein Beispiel für den Aufbau der Türstation 2 veranschaulicht. Hier handelt es sich beispielsweise um eine Audio-Ausführung mit sechs Ruftasten. Realisiert wird diese Ausführung mit drei Hauptmodulen 20, und zwar einem obligatorischen Busankoppler-Einsatz 34, einem Sprecheinsatz 52 und einem zusätzlichen Tasteneinsatz 50. Als Funktionsmodule 22 sind zwei Tastenaufsätze 62 und ein Sprechaufsatz 64 vorgesehen. Im Verbindungsbereich zwischen den Hauptmodulen 20 und den Funktionsmodulen 22 ist zudem ein Trägerrahmen 82 angeordnet, und als äussere Abdeckung ist ein Blendrahmen 84 vorgesehen. Weitere Tasten können durch Anreihung weiterer Tasteneinsätze 50 mit entsprechenden Tastenaufsätzen 62 realisiert werden. Zumindest der mit dem Busankoppler 34 zu verbindende Tastenaufsatz 62 ist mit einer entsprechenden Kennung programmiert, über die der Busankoppler 34 erfährt, dass er als Türstation arbeiten soll und nur Ruftasten vorgesehen sind.

In Fig. 5 und 6 ist eine Ausführung der Wohnungsstation 4 mit Hörer 68 veranschaulicht. Als Hauptmodule 20 sind der Busankoppler 34 und der Hörereinsatz 54 vorgesehen. Als Funktionsmodul 22 wird der Busankoppler 34 mit einem Tastenaufsatz 62 mit spezieller Kennung (als Steuertaster) verbunden, wodurch der Busankoppler 34 als Wohnungsstation arbeitet, das heißt, er veranlasst beim Empfang eines übereinstimmenden Adresscodes die Ausgabe eines Ruftons über den Internbus 36 an den Hörereinsatz 54, wodurch ein Ruf erklingt. Der Busankoppler 34 aktiviert zum Verbindungsaufbau über den Hörereinsatz 54 den Sprech-Hörkreis. Die Information, dass das Gerät einen Hörer besitzt, erhält der Busankoppler 34 über eine bestimmte Kennung des Hörereinsatzes 54. Zur Halterung des Hörers 68 sind zwei Hörer-Aufnahmeaufsätze 66 vorgesehen, die auf dem Hörereinsatz 54 und einem Tragelement 28 insbesondere über Rastverbindungen gehalten werden. Die Funktionen des Tastenaufsatzes 62 sind hier bevorzugt Treppenhauslichtaktivierung, Türöffneraktivierung, Rufabschaltung und Lautstärkeregelung des Ruftons und der Hörerlautstärke.

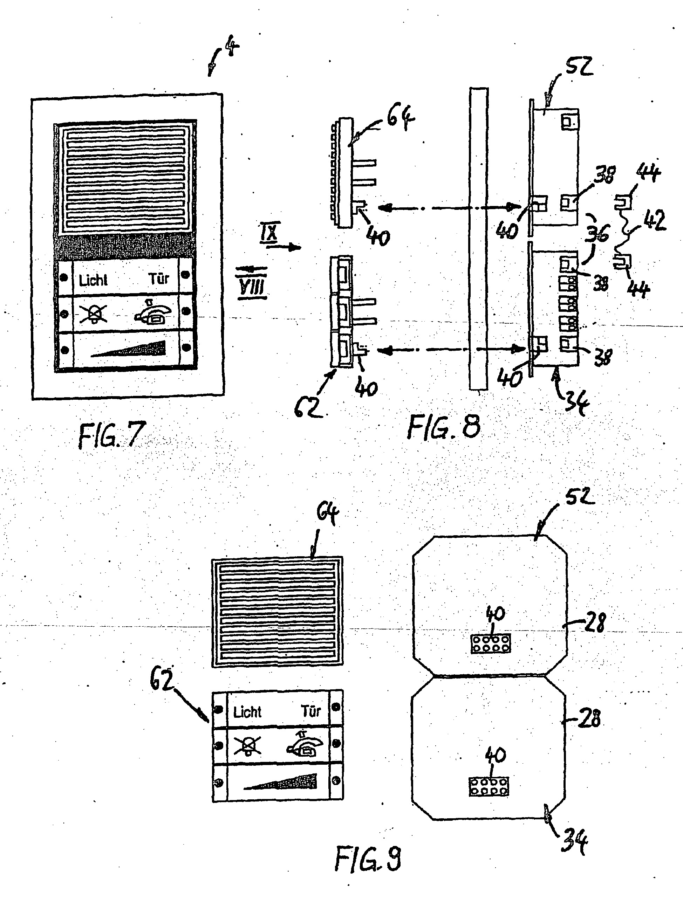

In Fig. 7 bis 9 ist einen Ausführung der Wohnungsstation 4 mit Freisprechfunktion veranschaulicht. Dazu wird diese Station aufgebaut durch einen Busankoppler 34 mit Tastenaufsatz 62 sowie durch einen Sprecheinsatz 52 mit Sprechaufsatz 64. Der Tastenaufsatz 62 hat eine Kennung (als Steuertaster) für die Wohnungsstation und der Sprecheinsatz 52 eine Kennung für Freisprechen. Dadurch weiss der Busankoppler 34, welches Gerät insgesamt konzipiert ist und kann die Tasten sowie die jeweiligen Bus-Protokolle entsprechend auswerten, insbesondere bezüglich einer Rufannahmetaste, welche beim Hörergerät nicht vorhanden ist. Über diese Taste wird vom Bediener nach Eingang eines Rufens von einem anderen Teilnehmer der Sprech-Hörkreis aktiviert.

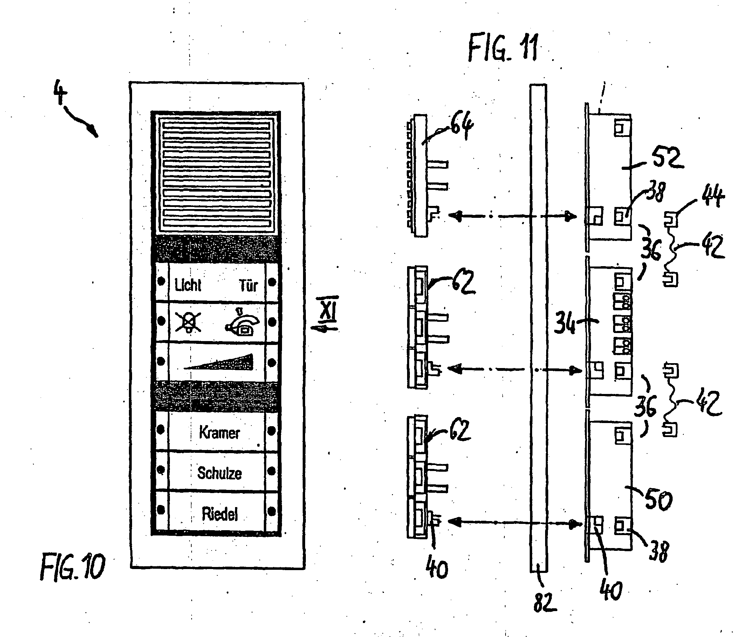

In Fig. 10 und 11 ist die Ausführung einer Wohnungsstation 4 mit Internruftasten dargestellt. Über diese Internruftasten können vorteilhafterweise von einer Wohnungsstation andere Wohnungsstationen angerufen werden. Somit können Nachbarn über die erfindungsgemäße Anlage kommunizieren. Über die Tasten können weitere Funktionen realisiert werden, beispielsweise Schalten von Licht, Öffnen und Schließen von Jalousien usw. Die Tastenaufsätze 62 haben unterschiedliche Kennungen einerseits als Steuertasten und andererseits als Ruftasten. Deshalb ist zur Vermeidung von undefinierten Zuständen vorgesehen, dass die Kennung der Steuertasten Vorrang gegenüber den Ruftasten hat. Somit kann beispielsweise eine Türstation schnell durch Wechsel des Tastenaufsatzes zur Wohnungsstation mit Freisprechfunktion umgebaut werden.

Bei der Ausführung nach Fig. 12 und 13 handelt es sich um eine Wohnungsstation 4 mit Sprachrekordereinsatz 60. Dies ist ein Zusatzgerät, welches nach Art eines Anrufbeantworters bei Abwesenheit des Hausbewohners Sprachmitteilungen eines Besuchers aufzeichnet. Zur Steuerung dieser Funktionen wird der Sprachrekordereinsatz 60 mit einem Tastenaufsatz 62 verbunden, dessen Tasten spezielle Steuerfunktionen aufweisen. Über eine Taste "Aktiv" wird das Gerät aktiviert. Über eine Taste "Text" lässt sich vom Bewohner ein Ansagetext aufsprechen, welcher nach Ruftastenbetätigung abgespielt und über den Lautsprecher an der Türstation 2 wiedergegeben wird. Über Pfeiltasten lassen sich die Rekorderfunktionen steuern. Der Sprachrekordereinsatz 60 simuliert auch im aktivierten Zustand die Rufannahme und stellt die Verbindung zur rufenden Station her. Wird der Sprachrekorder abgehört, so wird der Sprech- bzw. Hörereinsatz des Gerätes genutzt. Grundsätzlich könnte hierbei auch eine Video-Aufzeichnung mittels eines Videorekorders oder eine Bildaufzeichnung mittels eines Bildrekorders vorgesehen sein.

Die in den Fig. 14 bis 17 veranschaulichten Stationen sind zur Videoübertragung ausgelegt. Gemäß Fig. 14 und 15 enthält dazu die Türstation 2 einen Kameraeinsatz 56 mit Kameradeckel 78. Der Kameraeinsatz 56 wird über den Intembus 36 angeschlossen bzw. an beliebiger Stelle eingereiht. Die Kamera 74 des Kameraeinsatzes 56 wird vom Busankoppler 34 aus gesteuert. Wird eine der Ruftasten der Türstation 2 betätigt, wird die Kamera eingeschaltet, die ihr Videosignal entweder über die gesonderte Videoleitung 80 oder moduliert über die Busverbindung 6 sendet. Nach Beendigung der Verbindung wird die Kamera abgeschaltet. Ein Kameraeinsatz kann auch in der Wohnungsstation installiert sein, um eine Video-Gegenverbindung zu realisieren. Der Kameraeinsatz 56 meldet sich ebenfalls über eine Kennung beim Busankoppler 34 an.

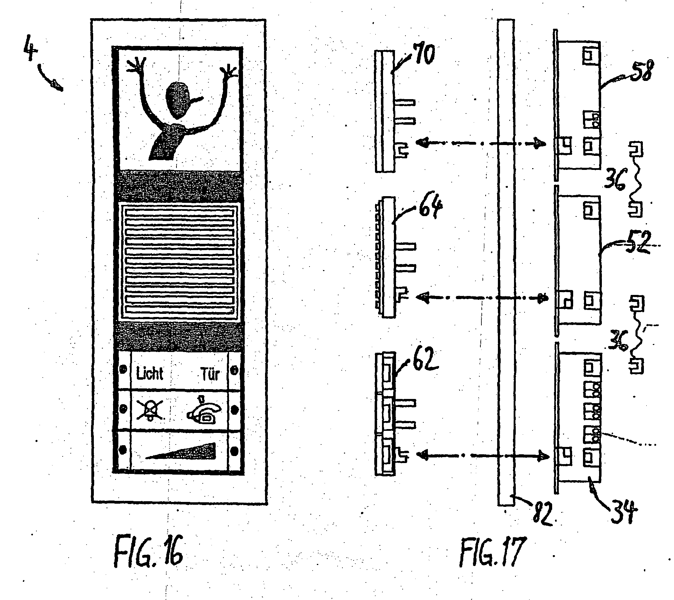

In den Fig. 16 und 17 ist die zugehörige Video-Wohnungsstation 4 veranschaulicht. Diese ist mit dem Displayeinsatz 58 und dem zugehörigen Displayaufsatz 70 ausgestattet. Der Displayeinsatz 58 wird ebenfalls über den Internbus 36 angeschlossen bzw. eingereiht. Der Displayaufsatz 70 wird vom Busankoppler 34 aus gesteuert. Bei einem eingehenden Ruf wird das Display eingeschaltet und zeigt das von der Kamera an der rufenden Türstation 2 gesendete Bild. Nach Beendigung der Verbindung wird das Display abgeschaltet. Auch der Displayeinsatz 58 meldet sich über eine bestimmte Kennung beim Busankoppler 34 an.

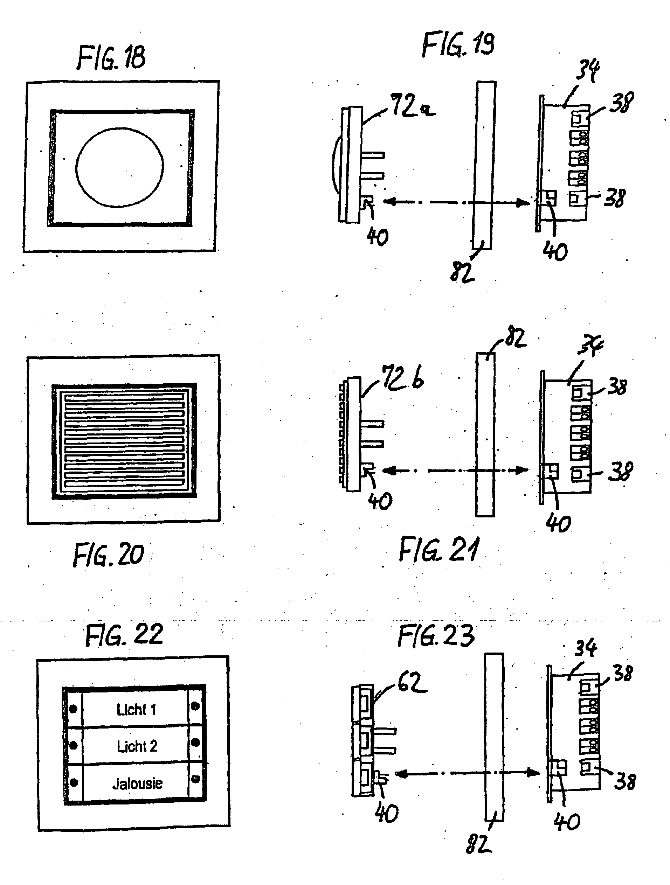

In den weiteren Figuren ab Fig. 18 sind noch bestimmte modulare Zusatzgeräte veranschaulicht, die gesondert oder in direkter Kombination mit einer Station 2, 4 installiert werden können.

Bei der Ausführung nach Fig. 18 und 19 handelt es sich um ein Lichtsignalgerät, bestehend aus dem Busankoppler 34 und einem optischen Signalaufsatz 72 (z. B. Stroboskop). Dieses Gerät ermöglicht schwerhörigen Menschen die optische Signalisierung eines Türrufes

Gemäß Fig. 20 und 21 handelt es sich um ein Rufsignalgerät, bestehend aus Busankoppler 34 und akustischem Signalaufsatz 72 (Rufaufsatz). Dieses Gerät dient als Zusatzgerät zur Verstärkung der Lautstärke eines Türrufs insbesondere in großen Häusern oder Wohnungen.

Schließlich zeigen Fig. 22 und 23 einen Zusatztaster, der wie ein Intemruftaster arbeitet. Er besteht aus dem Busankoppler 34 und einem Tastenaufsatz 62. Dabei ist allerdings eine Kennung derart vorgesehen, dass die Tasten ausschließlich zum Aussenden von Schaltbefehlen an beliebige Aktoren arbeiten, wie Lichtschalter, Dimmer usw. Die Aktoren befinden sich beispielsweise in einer Elektro-Unterverteilung und/oder als Einbaugeräte in Zwischendecken oder dergleichen. Sie beinhalten zum Empfang von Daten die Elektronik entsprechend dem Busankoppler 34.

An dieser Stelle sei abschließend nochmals erwähnt, dass es sich bei dem Hauskommunikationssystem in Abweichung von der bisherigen konkreten Beschreibung auch um eine sogenannte "1+n-Anlage" handeln kann. Hierbei dient dann der Busankoppler 34 jeweils als Verbindungsglied zwischen dem Intembus 36 und der externen Zweidraht-Leitung, wobei dann die Türstation 2 entsprechend einen mehradrigen Anschluß besitzt (für jede angeschlossene Wohnungsstation 4 einen gesonderten Draht + einen gemeinsamen Massedraht).

## Patentansprüche

1. Hauskommunikationsanlage mit mindestens einer Türstation (2) und mindestens einer Wohnungsstation (4), wobei zumindest die Wohnungsstation (4) über eine Zweidraht-Leitung angeschlossen bzw. anschließbar ist, und wobei die Türstation (2) und/oder die Wohnungsstation (4) modular jeweils aus mindestens einem, als dezentrale Intelligenz elektronische Geräte-Funktionsteile enthaltenden und als ein an die Zweidraht-Leitung anzuschließender Busankoppler Einsatz (34) ausgebildeten Hauptmodul (20) sowie mindestens einem dem Hauptmodul (20) zugeordneten und elektrische Funktionselemente aufweisenden Funktionsmodul (22) aufgebaut sind/ist, wobei das Hauptmodul (20) nach Art eines Elektro-Installationsgerätes eines üblichen Gebäudeinstallationssystems aus einem sockelartigen, in eine normgemäße Elektro-Installationsdose (24) einsetzbaren Geräte-Einsatz (26) besteht, der ein rahmen- oder plattenförmiges Tragelement (28) derart aufweist, dass das Tragelement (28) im in die Installationsdose (24) eingesetzten Zustand des Geräte-Einsatzes (26) im Wesentlichen in einer Öffnungsebene der Installationsdose (24) und randlich auf einer Montagefläche (30) liegt, wobei das Funktionsmodul (22) elektrisch und mechanisch mit dem zugehörigen Hauptmodul (20) verbindbar ist, indem es als Aufsatz unmittelbar auf den Geräte-Einsatz (26) aufsteckbar ist.

2. Hauskommunikationsanlage nach Anspruch 1,
**dadurch gekennzeichnet, dass** zumindest das Hauptmodul (20) universell für die Türstation (2) und die Wohnungsstation (4) einsetzbar ist.

3. Hauskommunikationsanlage nach Anspruch 1 oder 2,
**dadurch gekennzeichnet, dass** das Hauptmodul (20) ein Verbindungsglied zwischen der extemen Zweidraht-Busverbindung (6) und einem die zugehörigen Module (20, 22) der Station (2, .4) verbindenden Intembus (36) bildet.

4. Hauskommunikationanlage nach einem der Ansprüche 1 bis 3,
**dadurch gekennzeichnet, dass** die modular aufgebaute Station (2, 4) mehrere Hauptmodule (20) aufweist, von denen eines der Busankoppler-Einsatz (34) ist.

5. Hauskommunikationsanlage nach einem der Ansprüche 1 bis 4,
**dadurch gekennzeichnet, dass** zumindest das/jedes Hauptmodul (20) universell für die Türstation (2) und die Wohnungsstation (4) einsetzbar ist.

6. Hauskommunikationsanlage nach einem der Ansprüche 1 bis 5,
**dadurch gekennzeichnet, dass** die Zweidraht-Busverbindung (6) auch zur Übertragung einer Versorgungsspannung vorgesehen ist.

7. Hauskommunikationsanlage nach einem der Ansprüche 1 bis 6,
**dadurch gekennzeichnet, dass** alle zumindest eine überwiegende Zahl der Tür- und Wohnungsstationen (2, 4) aus universell für jede beliebige Station (2, 4) der Anlage einsetzbaren Haupt- und Funktionsmodulen (20, 22) aufgebaut sind.

8. Hauskommunikationsanlage nach einem der Ansprüche 1 bis 7,
**dadurch gekennzeichnet, dass** jedes Hauptmodul (20) durch Verbindung mit einem bestimmten Funktionsmodul (22) oder mit einem bestimmten weiteren Hauptmodul (20) und/oder durch Schalt-/Einstellmittel eine bestimmte, elektrische und/oder mechanische Gerätefunktion erhält.

9. Hauskommunikationsanlage nach einem der Ansprüche 4 bis 8,
**dadurch gekennzeichnet, dass** jedes weitere Hauptmodul (20) als Tasteneinsatz (50) oder als Sprecheinsatz (52) mit Freisprechfunktion oder als Hörereinsatz (54) zum Anschluss eines Hörers (68) oder als Kamera- oder Displayeinsatz (56, 58) zur Videoübertragung oder als Sprachrekordereinsatz (60) oder als Bildrekordereinsatz ausgebildet ist.

10. Hauskommunikationsanlage nach einem der Ansprüche 1 bis 9,
**dadurch gekennzeichnet, dass** als Funktionsmodul (22) ein Tastenaufsatz (62) mit einer oder mehreren Drucktasten, ein Sprechaufsatz (64) mit Mikrophon und/oder Lautsprecher, ein Hörer-Aufnahmeaufsatz (66) mit Haltemitteln für einen Hörer (68), ein Displayaufsatz (70), ein Kameraaufsatz und/oder ein Signalaufsatz (72) mit akustischem und/oder optischem Signalgeber vorgesehen sind/ist.

11. Hauskommunikatiönsanlage nach einem der Ansprüche 1 bis 10,
**gekennzeichnet durch** ein zentrales, an die Zweidraht-Busverbindung (6) anzuschließendes und ein Netzteil aufweisendes Bussteuergerät (8).

12. Hauskommunikationsanlage nach Anspruch 11,
**dadurch gekennzeichnet, dass** das Bussteuergerät (8) eine von den Wohnungsstationen (4) aus durch digitale Signale ansteuerbare Türöffner-Ansteuerung (10) aufweist.

13. Hauskommunikationsanlage nach einem der Ansprüche 1 bis 12,
**gekennzeichnet durch** mindestens einen an die Busverbindung (6) anzuschließenden, zumindest von den Wohnungsstationen (4) aus **durch** digitale Signale und/oder über separate Lichttaster (16) ansteuerbaren Lichtaktor (14).

14. Hauskommunikationsanlage nach einem der Ansprüche 1 bis 13,
**gekennzeichnet durch** mindestens ein modulares Zusatzgerät in Form eines Lichtsignalgerätes, eines Rufsignalgerätes bzw. eines Tastergerätes, wobei jedes Zusatzgerät als Hauptmodul (20) einen Busankoppler-Einsatz (34) und als Funktionsmodul (22) einen Lichtsignalaufsatz (72a), einen Tonsignalaufsatz (72b) bzw. einen Tastenaufsatz (62) aufweist.

15. Hauskommunikationsanlage nach einem der Ansprüche 1 bis 14,
**dadurch gekennzeichnet, dass** zumindest ein Teil der Haupt- und Funktionsmodule (20, 22) als dezentrale Intelligenz jeweils einen Mikrocontroller aufweist.

## Claims

1. House communication system having at least one door station (2) and at least one flat station (4) and in a configuration as a two-wire bus system, where a common two-wire bus connection (6) is provided for connecting all the stations (2, 4) and for transmitting control and communication signals, and where the door station (2) and/or the flat station (4) are/is modularly constructed in each case from at least one main module (20), which includes, as decentralised intelligence, electronic equipment function parts and is designed as a bus-coupler insert (34) to be connected to the two-wire bus connection (6), and from at least one function module (22) assigned to the main module (20) and having electrical function elements, where the bus-coupler insert (34) is designed in such a way that it forwards audio signals arriving from the bus connection (6) and audio signals to be sent to the bus connection (6) and activates talking electronics in a controlled manner only in the event of a speech connection setup after a call button actuation at the door station (2) or at another flat station (4), and where the main module (20) comprises, in the manner of electrical installation equipment of a customary building installation system, a socket-like equipment insert (26) which can be inserted into a standard electrical installation box (24) and has a frame- or plate-shaped supporting element (28), such that, when the equipment insert (26) has been inserted into the installation box (24), the supporting element (28) lies substantially in an opening plane of the installation box (24) and, at the border, on a mounting surface (30), where the function module (22) can be electrically and mechanically connected to the associated main module (20) by being able to be plugged, as a top, directly into the equipment insert (26).

2. House communication system according to Claim 1, **characterised in that** at least the main module (20) is universally usable for the door station (2) and the flat station (4).

3. House communication system according to Claim 1 or 2,
**characterised in that** the main module (20) forms a connecting link between the external two-wire bus connection (6) and an internal bus (36) connecting the associated modules (20, 22) of the station (2, 4).

4. House communication system according to one of Claims 1 to 3,
**characterised in that** the modularly constructed station (2, 4) has a plurality of main modules (20), one of which is the bus-coupler insert (34).

5. House communication system according to one of Claims 1 to 4,
**characterised in that** at least the/each main module (20) is universally usable for the door station (2) and the flat station (4).

6. House communication system according to one of Claims 1 to 5,
**characterised in that** the two-wire bus connection (6) is also provided for transmitting a supply voltage.

7. House communication system according to one of Claims 1 to 6,
**characterised in that** all or at least a majority of the door and flat stations (2, 4) are constructed from main and function modules (20, 22) which are universally usable for any desired station (2, 4) of the system.

8. House communication system according to one of Claims 1 to 7,
**characterised in that** each main module (20) is furnished with a specific electrical and/or mechanical equipment function by connection to a specific function module (22) or to a specific further main module (20) and/or by switching/adjusting means.

9. House communication system according to one of Claims 4 to 8,
**characterised in that** each further main module (20) is designed as a button insert (50) or as a talking insert (52) with hands-free talking function or as a handset insert (54) for connection to a handset (68) or as a camera insert or display insert (56, 58) for video transmission or as a speech recorder insert (60) or as an image recorder insert.

10. House communication system according to one of Claims 1 to 9,
**characterised in that** a button top (62) with one or more push-buttons, a talking top (64) with microphone and/or loudspeaker, a handset-receiving top (66) with holding means for a handset (68), a display top (70), a camera top and/or a signal top (72) with acoustic and/or optical signal generator are/is provided as the function module (22).

11. House communication system according to one of Claims 1 to 10,
**characterised by** a central bus control device (8) which is to be connected to the two-wire bus connection (6) and has a mains power unit.

12. House communication system according to Claim 11,
**characterised in that** the bus control device (8) has a door-opener drive (10) which can be driven from the flat stations (4) by digital signals.

13. House communication system according to one of Claims 1 to 12,
**characterised by** at least one light actuator (14) which is to be connected to the bus connection (6) and can be driven at least from the flat stations (4) by digital signals and/or via separate light buttons (16).

14. House communication system according to one of Claims 1 to 13,
**characterised by** at least one modular additional device in the form of a light signal device, a call signal device or a button device, where each additional device has a bus-coupler insert (34) as the main module (20), and a light signal top (72a), a sound signal top (72b) or a button top (62) as the function module (22).

15. House communication system according to one of Claims 1 to 14,
**characterised in that** at least some of the main and function modules (20, 22) have, as decentralised intelligence, in each case a microcontroller.

## Revendications

1. Installation de communication domestique comprenant au moins une station de porte (2) et au moins une station d'habitation (4), et dans une configuration sous forme de système de bus à deux fils, dans laquelle une ligne de bus (6) à deux fils est prévue pour relier toutes les stations (2, 4) et pour transmettre des signaux de commande et de communication, et dans laquelle la station de porte (2) et/ou la station d'habitation (4) est/sont construite(s) de façon modulaire respectivement à partir d'au moins un module principal (20) contenant des parties fonctionnelles d'appareils électroniques comme intelligence décentralisée et réalisé comme une insertion de coupleur de bus (34) à raccorder à la ligne de bus (6) à deux fils, ainsi qu'à partir d'au moins un module fonctionnel (22) attribué au module principal (20) et présentant des éléments fonctionnels électriques, dans laquelle l'insertion de coupleur de bus (34) est réalisée de telle sorte qu'elle retransmet des signaux audio arrivant depuis la ligne de bus (6) et destinés à être envoyés sur la ligne de bus (6) et que, seulement en cas d'établissement d'une communication vocale, après un actionnement de touche d'appel au niveau de la station de porte (2) ou d'une autre station d'habitation (4), elle active de façon commandée une électronique vocale, et dans laquelle le module principal (20) se compose, à la façon d'un appareil d'installation électrique d'un système d'installation de bâtiment classique, d'une insertion d'appareil (26) de type socle et pouvant être inséré dans une prise d'installation électrique (24) conforme aux normes, ladite insertion présentant un élément porteur (28) en forme de cadre ou de plaque de telle sorte que l'élément porteur (28) est disposé, à l'état où l'insertion d'appareil (26) est insérée dans la prise d'installation (24), sensiblement dans un plan d'ouverture de la prise d'installation (24) et repose en bordure sur une surface de montage (30), le module fonctionnel (22) pouvant être relié électriquement et mécaniquement au module principal (20) associé, du fait qu'il peut être emboîté comme élément rapporté directement sur l'insertion d'appareil (26).

2. Installation de communication domestique selon la revendication 1,
**caractérisée en ce qu'**au moins le module principal (20) peut être utilisé de façon universelle pour la station de porte (2) et la station d'habitation (4).

3. Installation de communication domestique selon la revendication 1 ou 2,
**caractérisée en ce que** le module principal (20) forme un élément de liaison entre la ligne de bus (6) à deux fils externe et un bus interne (36) reliant les modules (20, 22) associés de la station (2, 4).

4. Installation de communication domestique selon l'une quelconque des revendications 1 à 3,
**caractérisée en ce que** la station (2, 4) structurée de façon modulaire présente plusieurs modules principaux (20) dont l'un est l'insertion de coupleur de bus (34).

5. Installation de communication domestique selon l'une quelconque des revendications 1 à 4,
**caractérisée en ce qu'**au moins ledit/chaque module principal (20) peut être utilisé de façon universelle pour la station de porte (2) et la station d'habitation (4).

6. Installation de communication domestique selon l'une quelconque des revendications 1 à 5,
**caractérisée en ce que** la ligne de bus (6) à deux fils est prévue également pour la transmission d'une tension d'alimentation.

7. Installation de communication domestique selon l'une quelconque des revendications 1 à 6,
**caractérisée en ce que** l'ensemble ou tout du moins un nombre prépondérant des stations de porte et d'habitation (2, 4) est conçu à base de modules principaux et modules fonctionnels (20, 22) pouvant être utilisés de façon universelle pour toute station (2, 4) quelconque de l'installation.

8. Installation de communication domestique selon l'une quelconque des revendications 1 à 7,
**caractérisée en ce que** chaque module principal (20) reçoit une certaine fonction d'appareil électrique et/ou mécanique en relation avec un certain module fonctionnel (22) ou avec un certain autre module principal (20) et/ou par des moyens de commutation/réglage.

9. Installation de communication domestique selon l'une quelconque des revendications 4 à 8,
**caractérisée en ce que** chaque module principal (20) supplémentaire est conçu comme insertion à touches (50) ou comme insertion vocale (52) avec fonction mains libres ou comme insertion d'écouteur (54) pour le raccordement d'un écouteur (68) ou comme insertion de caméra ou insertion d'affichage (56, 58) pour la transmission vidéo ou comme insertion d'enregistreur vocal (60) ou comme insertion d'enregistreur d'image.

10. Installation de communication domestique selon l'une quelconque des revendications 1 à 9,
**caractérisée en ce que**, comme module fonctionnel (22), il est prévu un élément rapporté à touches (62) avec une ou plusieurs touches à pression, un élément rapporté vocal (64) avec microphone et/ou haut-parleur, un élément rapporté de logement d'écouteur (66) avec des moyens de retenue pour un écouteur (68), un élément rapporté d'affichage (70), un élément rapporté de caméra et/ou un élément rapporté de signalisation (72) avec générateur de signaux acoustiques et/ou optiques.

11. Installation de communication domestique selon l'une quelconque des revendications 1 à 10,
**caractérisée par** un appareil de commande de bus (8) central, à raccorder à la ligne de bus (6) à deux fils et présentant un bloc d'alimentation.

12. Installation de communication domestique selon la revendication 11,
**caractérisée en ce que** l'appareil de commande de bus (8) présente une commande d'ouverture de porte (10) pouvant être actionnée à partir des stations d'habitation (4) par des signaux numériques.

13. Installation de communication domestique selon l'une quelconque des revendications 1 à 12,
**caractérisée par** au moins un actionneur de lumière (14) à raccorder à la ligne de bus (6) et pouvant être actionné au moins à partir des stations d'habitation (4) par des signaux numériques et/ou au moyen de boutons-poussoirs lumineux (16) séparés.

14. Installation de communication domestique selon l'une quelconque des revendications 1 à 13,
**caractérisée par** au moins un appareil supplémentaire modulaire sous la forme d'un appareil de signalisation lumineuse, d'un appareil de signalisation d'appel ou d'un appareil palpeur, chaque appareil supplémentaire présentant comme module principal (20) une insertion de coupleur de bus (34) et comme module fonctionnel (22) un élément rapporté de signal lumineux (72a), un élément rapporté de signal sonore (72b) ou un élément rapporté à touches (62).

15. Installation de communication domestique selon l'une quelconque des revendications 1 à 14,
**caractérisée en ce qu'**au moins une partie des modules principaux et fonctionnels (20, 22) présente chacun un microcontrôleur comme intelligence décentralisée.
